# EUROPEAN PATENT SPECIFICATION

(11) **EP 2 607 684 B1**
(45) Date of publication and mention of the grant of the patent: **01.04.2015**
(21) Application number: 11194370.0
(22) Date of filing: 19.12.2011
(51) Int. Cl.: F03D 1/00, F03D 1/06

(54) **Means to rotate the rotor of a wind turbine and method to rotate the rotor**
Mittel zum Drehen des Rotors einer Windturbine und Verfahren zum Drehen des Rotors
Moyen de rotation du rotor d'une éolienne et procédé pour faire tourner le rotor

(43) Date of publication of application: 26.06.2013
(73) Proprietor: Siemens Aktiengesellschaft, 80333 München (DE)
(72) Inventor: Falkenberg, Peter Loevenskjold, 7400 Herning (DK); Maj, Karl Aage, 8450 Hammel (DK); Poulsen, Henning, 6900 Skjern (DK); Stiesdal, Henrik, 5000 Odense C (DK); Nielsen, Jacob Blach, 7442 Engesvang (DK); Rasmussen, Brian, 7323 Give (DK)

(56) References cited:
- EP-A1- 1 659 286
- WO-A2-2010/103086
- US-A1- 2006 147 308
- US-A1- 2011 138 626

## Description

The invention relates to means to rotate the rotor of a wind turbine and a method to rotate the rotor.

A wind turbine transfers the energy of the wind into electrical energy. The wind turbine comprises a nacelle that is connected to a tower and a rotor that is connected to the nacelle. The rotor comprises a hub that is rotatable mounted to the nacelle and at least one rotor blade mounted to the hub.

The wind interacts with the rotor blade of the wind turbine in a way that the rotor rotates. The rotation of the rotor is transferred to an electrical generator.

When the wind turbine is erected, the tower is set up and the nacelle is mounted onto the tower. The hub is mounted to the nacelle and the at least one rotor blade is mounted to the hub.

The at least one rotor blade is hoisted up by a crane and connected to the hub. The hub has to be in a predetermined angular rotational position around it's axis of rotation to establish the connection between the hub and the rotor blade.

This position corresponds to the direction of the blade during the fastening of the connection. The position can be a horizontal or a vertical arrangement of the hub and the rotor blade for example.

The hub has to be rotated to establish the connection between the hub and a first rotor blade. In the case of more then one rotor blade that has to be mounted, the position of the hub has to be changed. The hub has to be rotated form the first into a second position to establish the connection between the hub and the second rotor blade.

US 2006/0147308 A1 describes a method of mounting rotor blades to a rotor hub which is connected to a pod of a wind turbine power installation, including the following steps: rotating the rotor hub into a predetermined first position, fitting a rotor blade, rotating the rotor hub by means of the rotor blade into a predetermined second position, and mounting a second rotor blade, wherein the rotation of the rotor hub is effected in the direction of the effect of gravitational force of the first rotor blade which is already mounted.

This shows the disadvantage that there are no gravitational forces to support the rotation before the connection between the hub and the first rotor blade is established. Furthermore the gravitational force of a first rotor blade will support the rotation into a second position only for a part of the rotation. In a certain second part of the rotation the rotation needs to be performed against the gravitational forces of the first rotor blade. Thus the described method is not reliable enough to perform the rotation of the hub during the installation of the rotor blades.

A rotation of the hub is necessary for the installation of the blades, but it can also be necessary before or after the installation of the blades. This can be during the installation of at least a segment of the generator, during maintenance and service, or for the dismantling of the wind turbine.

WO 2010/103086 A2 describes an arrangement for in situ mounting of rotor blades to a rotor of a wind power plant comprising rotor blades, a rotor hub, a disc, a means for rotation of the disc around its axis. The disc is in connection with the rotor hub in such a way that when the disc rotates a certain degree of angle around its axis it will cause the rotor hub to rotate the same degree of an angle around the axis of the rotor hub. When the means for rotation comes into a desired position, the disc is secured by securing means.

It is the aim of the invention to provide improved means and a method to rotate the hub of a wind turbine during the installation of the rotor blades.

The aim is reached by the features of the independent claim. Preferred embodiments of the invention are described in the dependent claims.

A direct driven wind turbine comprises an electrical generator with a rotor and a stator, a hub constructed to receive a rotor blade, and actuator means, whereby the hub is connected to the rotor of the electrical generator.

The hub and the rotor of the electrical generator are rotatable mounted to the stator of the generator.

The actuator means are constructed and arranged to rotate the rotor of the electrical generator in respect to the stator of the electrical generator, whereby the actuator means comprise a linear actuator and the linear actuator rotates the rotor of the generator.

The linear actuator is small enough to be placed to act between the rotor and the stator. The linear actuator can be attached to the rotor and the stator or to constructive parts attached to the rotor and the stator. When the linear actuator is activated, it pushes or pulls the rotor in respect to the stator.

Thus the linear actuator does not need extra space that has to be provided inside the wind turbine. Thus the linear actuator can be attached easily and does not need extensive additional constructive elements to act of the rotor and the stator.

Thus the rotor of the electrical generator including the hub can be rotated in respect to the stator of the electrical generator. Thus the rotor can be positioned in respect to the stator. Thus the hub can be rotated into a predetermined position to attach or detach a rotor blade to the hub.

The linear actuator comprises a first end and a second end and an intermediate part, which is arranged between the first and the second end, while the intermediate part comprises a drive that is constructed in a way to change the distance between the first end and the second end.

The drive in the intermediate part of the linear actuator changes the distance between the first end and the second end. The first end and the second end of the linear actuator are attached to or close to the rotor and the stator of the generator. Thus the linear actuator can push or pull the second end in respect to the first end. Thus the linear actuator can push or pull the rotor in respect to the stator of the generator of the wind turbine.

In a preferred embodiment the stator of the generator is attached to a support structure and the first end of the linear actuator is detachably attached to the support structure.

The stator of the generator is connected to the support structure. The support structure is connected at least indirectly to the tower. Thus the support structure is rigid enough to carry the stator and the rotor including.the hub and the rotor blades of the wind turbine. Thus the support structure is rigid enough to take the loads of accelerating or braking the rotor of the generator including the hub.

The support structure is accessible in the nacelle of the wind turbine. Thus the accessibility of the support structure for personnel to attach and detach the linear actuator is good.

The linear actuator can be mounted to the support structure without major changes in the construction of the support structure and without major changes in the construction of the wind turbine as such. Thus no or only small changes are necessary in the construction of the support structure to attach the linear actuator.

A brake disc is connected to the rotor and the second end of the linear actuator is detachably attached to the brake disc.

To brake the rotation of the wind turbine a brake disc is attached to the rotor of the wind turbine. Brakes are attached at a stationary part of the wind turbine like the support structure. The brake disc is constructed in a way that the rotation of the rotor including the hub and the rotor blades can be slowed down and stopped. Thus the brake disc is rigid enough to be used to move the rotor. Thus no additional attachment point at the rotor is needed.

Also the accessibility for personnel to the brake disc and brakes is very good as the brakes are subject to regular service. Thus the brake disc is designed in a way that it can be reached easily. Thus the linear actuator can be attached and detaches to the brake disc easily by personnel in the nacelle of the wind turbine.

The second end of the linear actuator comprises a caliper that is constructed in a way to be connected to the brake disc.

The brake disc is designed and constructed in a way that the calipers of the brake operate on the surface of the brake disc. Thus, when the linear actuator is equipped with calipers, this calipers act on the brake disc like the calipers of the brake. Thus no additional point of attachment is necessary at the brake disc or at the rotor of the generator to attach the linear actuator.

In a preferred embodiment the brake disc comprises cut-outs and the calipers of the linear actuator interact with at least one of the cut-outs.

The brake disc of the rotor normally comprises cut-outs, at the rim of in the disc like holes, that are used for locking the rotor in a certain position after stopping the rotor. These cut-outs can be used as attachment points to connect the calipers of the linear actuator to the brake disc. Therefore the calipers can be equipped with additional bolts to interact with the cut-outs. Thus the transfer of the force to accelerate or slow down the movement of the rotor can be increased. Thus the connection of the calipers to the brake disc is tighter and saver. Thus the calipers can be constructed smaller in size, as not the whole force is transferred by friction only.

In a preferred embodiment the linear actuator comprises a drive to activate and deactivate the caliper.

Thus the operation of the calipers can be motorized. Thus the operation of the calipers can be automated and controlled. Thus also a remote control of the operation of the calipers is possible.

In a preferred embodiment the drive is a pneumatic drive, a hydraulic drive or an electric drive.

A pneumatic, hydraulic and/or electric system is normally already present in the wind turbine and often already installed and in use when the rotor blades are mounted to the hub of the wind turbine. Thus a connection to an existing and working system can be used to activate the calipers of the linear actuator.

In a preferred embodiment the drive of the intermediate part of the linear actuator comprises a pneumatic or hydraulic cylinder or an electrical drive.

A pneumatic, hydraulic and/or electric system is normally already present in the wind turbine and often already installed and in use when the rotor blades are mounted to the hub of the wind turbine. Thus a connection to an existing and working system can be used to activate the drive in the linear actuator.

In a preferred embodiment the linear actuator is constructed and controlled in a way that the distance between the first end of the linear actuator and the second end can be set to a predetermined value, so that the second end of the linear actuator and/or the brake disc of the rotor, that is connected to the second end of the linear actuator, can be positioned in respect to the first end.

The distance between the first end and the second end can be set to a predetermined value by activating the drive in the intermediate part of the linear actuator. Thus the distance between the first and the second end can be controlled.

Thus the distance between the point where the first end is attached to and the point where the second end is attached to can be controlled. Thus the rotational position of the rotor in respect to the stator can be controlled. Thus the rotational movement of the rotor of the wind turbine can be controlled.

The rotor of a direct driven wind turbine is rotated by rotating the rotor of the generator in respect to the stator of the generator by use of the linear actuator.

Thus the linear actuator rotates the rotor of the generator of the wind turbine. Thus the rotor of the direct driven wind turbine can be rotated by rotating the rotor of the generator of the wind turbine.

In a preferred embodiment the rotor of a direct driven wind turbine is rotated by rotating the rotor of the generator in respect to the stator of the generator in a stepwise motion.

The rotation of the rotor is performed by the use of a linear actuator. At the end of the track of the linear actuator the linear actuator is detached at least from one of the rotor or the actuator and is retracted to the original position. Thereafter it is connected again for another movement of the rotor. This leads to a stepwise rotation of the rotor.

Thus a rotation larger then the rotation performed with one single push or pull of the linear actuator can be performed. Thus also a complete rotation of the rotor can be performed by the use of the linear actuator.

The method comprises the steps of attaching the caliper to the brake disc while the caliper is in a first position in relation to the support structure. The linear actuator is activated to increase or decrease the distance between the first end and the second end of the linear actuator, so that the caliper move from a first position to a second position in relation to the support structure, whereby the linear actuator pushes or pulls the rotor, and the rotor rotates in respect to the stator of the electrical generator.

Thus the rotation of the rotor in respect to the stator can be performed.

A rotation of the hub is necessary for the installation of the blades, but it can also be necessary before or after the installation of the blades. It can also be necessary during the installation of at least a segment of the generator, during maintenance and service, or for the dismantling of the wind turbine.

Thus the installation or the replacement of a blade or at least a segment of the generator can be performed. Thus also the maintenance and service for the hub, the blades and the generator can be performed.

The invention is shown in more detail by help of figures. The figures show a preferred configuration and do not limit the scope of the invention.
- FIG 1: shows a wind turbine with a rotor blade being connected to the wind turbine.
- FIG 2: shows a cut through a hub and a generator of a direct driven wind turbine.
- FIG 3: shows the linear actuator.
- FIG 4: shows the linear actuator in a second step.
- FIG 5: shows the linear actuator in a third step.
- FIG 6: shows the linear actuator in a fourth step.
- FIG 7: shows the linear actuator in a fifth step.
- FIG 8: shows the linear actuator in a sixth step.
- FIG 9: shows the use of two linear actuators at the brake disc of the wind turbine.

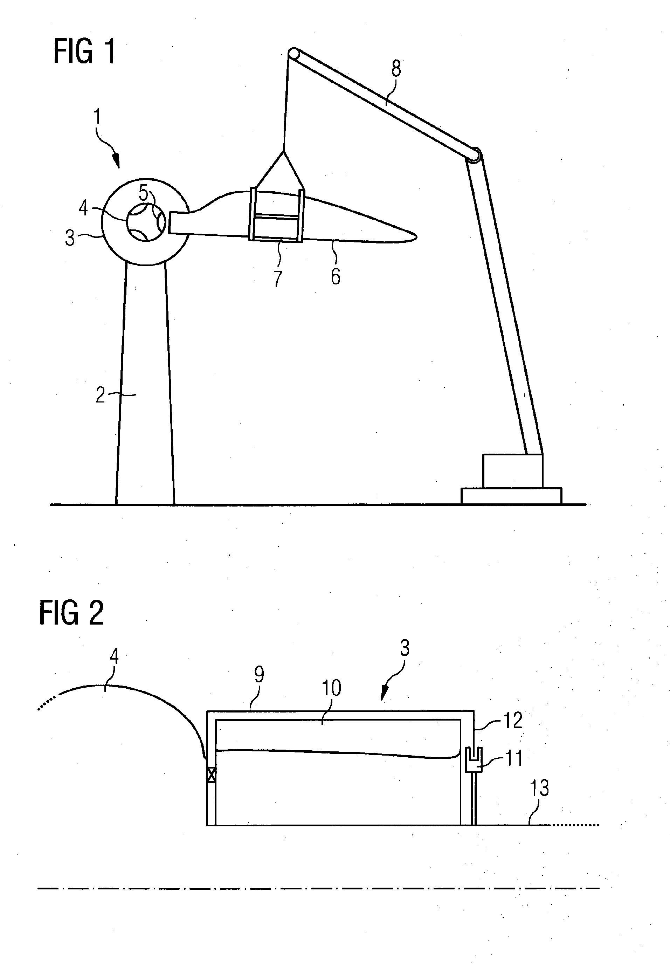

FIG 1 shows a wind turbine 1 with a tower 2, an electrical generator 3 and a hub 4. At the hub 4 are receiving spots 5 where rotor blades will be connected. A rotor blade 6 is carried in a lifting device 7 that is lifted up by a crane 8.

The rotor blade 6 is connected to one of the receiving spots 5.

In this example three receiving spots 5 are provided. A second rotor blade 6 can be attached to the hub 4 without moving the crane to another location, after the hub 4 is rotated. To mount the second rotor blade the hub has to be rotated by 120 degree, so that the receiving spot 5 of the second rotor blade is in the same position as the receiving spot 5 of the first rotor blade was, when the first rotor blade was attached.

FIG 2 shows a cut through a hub and a generator of a direct driven wind turbine.

FIG 2 shows a cut through a hub 4 and a generator 3 of a direct driven wind turbine. The cut is along the axis of rotation of the generator 3. The generator comprises a rotor 9 and a stator 10. The stator 10 is connected to a support structure 13. Attached to the rotor 9 of the generator 3 is a brake disc 12. A brake 11 is attached to the support structure 13. The brake 11 interacts with the brake disc 12 to brake the rotation of the rotor 9 of the generator 3. In addition there is a locking mechanism (not shown) that locks the position of the rotor 9 of the generator 3 in relation to the stator 10.

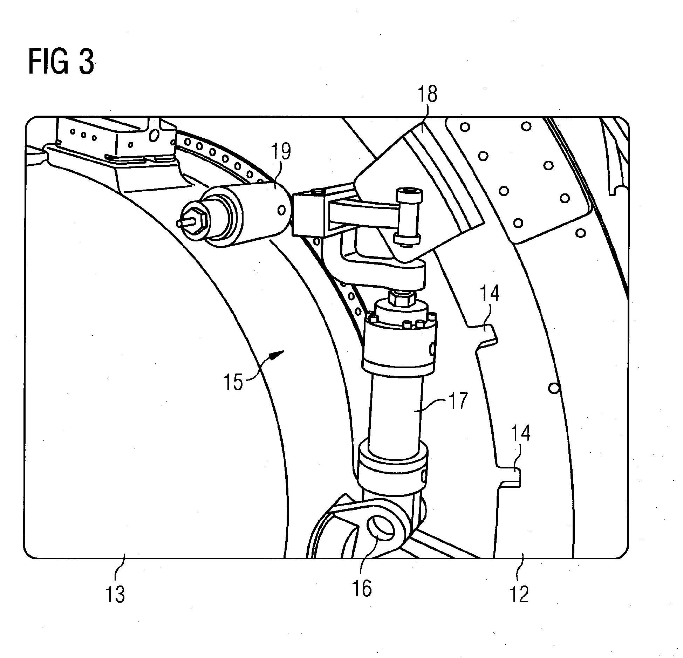

FIG 3 shows the linear actuator.

Fig 3 shows a detail of the support structure 13 and the brake disc 12 of the generator of the wind turbine. The brake disc 12 is mounted to the rotor of the generator. The brake disc 12 shows several cut outs 14 that are used by the locking mechanism. A bolt of the locking mechanism is pushed into the cut out 14 of the brake disc 12 to lock the rotation of the rotor of the generator. The locking mechanism with the bolt is connected to the support structure 13 of the wind turbine.

Fig 3 shows a linear actuator 15 that is detachably connected at a connection point 16 to the support structure 13 of the wind turbine with its first end. The linear actuator 15 comprises calipers 18 at its second end that are constructed to attach to the brake disc 12 and lock into the cut outs 14 present in the brake disc 12. The calipers 18 can be opened and closed by a drive 19.

The linear actuator 15 comprises a hydraulic cylinder 17.

In a first step the calipers 18 are open and the hydraulic cylinder 17 is completely retracted.

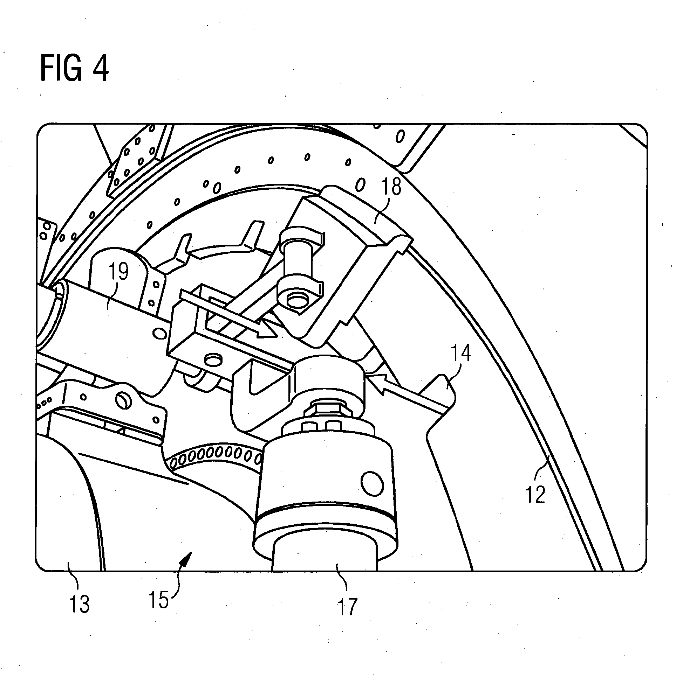

FIG 4 shows the linear actuator in a second step.

FIG 4 shows the linear actuator 15 when the hydraulic cylinder 17 is completely retracted. The calipers 18 are closed by the drive 19 to attach to the brake disc 12 and lock into the cut outs 14 of the brake disc 12. The movement of the calipers 18 is according to the arrows.

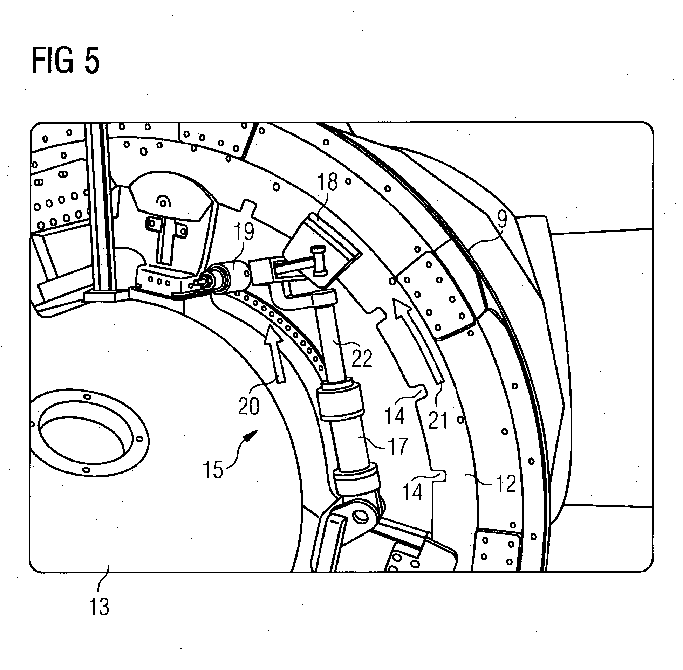

FIG 5 shows the linear actuator in a third step.

FIG 5 shows the linear actuator 15 in a third step. The calipers 18 of the linear actuator 15 are engaged to the brake disc 12 and the cut outs 14.

The hydraulic cylinder 17 is now extending. It is pushing the piston 22 in the direction of the arrow 20. As the calipers 18 are locked to the brake disc 12, the rotor 9 with the brake disc 12 is pushed in the direction of the arrow 21.

Thus the rotor 9 is pushed and rotates a predetermined part of a rotation.

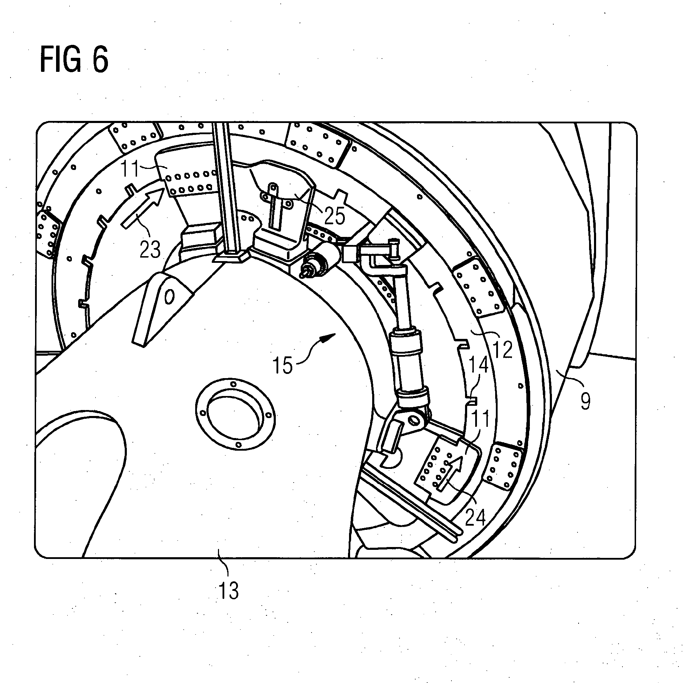

FIG 6 shows the linear actuator in a fourth step.

FIG 6 shows the linear actuator 15 after the piston 22 is extended. The brake 11 is engaged to stop the rotation. The calipers of the brake 11 are attached to the brake disc 12 in the direction of the arrows 23 and 24. After the rotation is stopped, the locking mechanism 25 locks the rotor 9 to the support structure 13 to avoid a further movement of the rotor 9.

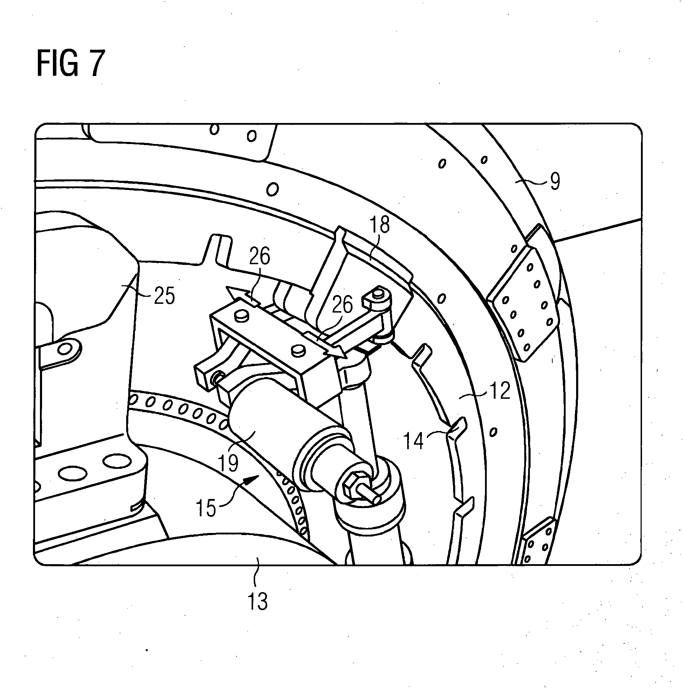

FIG 7 shows the linear actuator in a fifth step.

FIG 7 shows the linear actuator 15 after the rotor 9 has been locked to the support structure 13 by the locking mechanism 25. The calipers 18 are disengaged along the arrows 26 by help of the drive 19. The linear actuator is now no longer attached to the brake disc 12 and the cut outs 14.

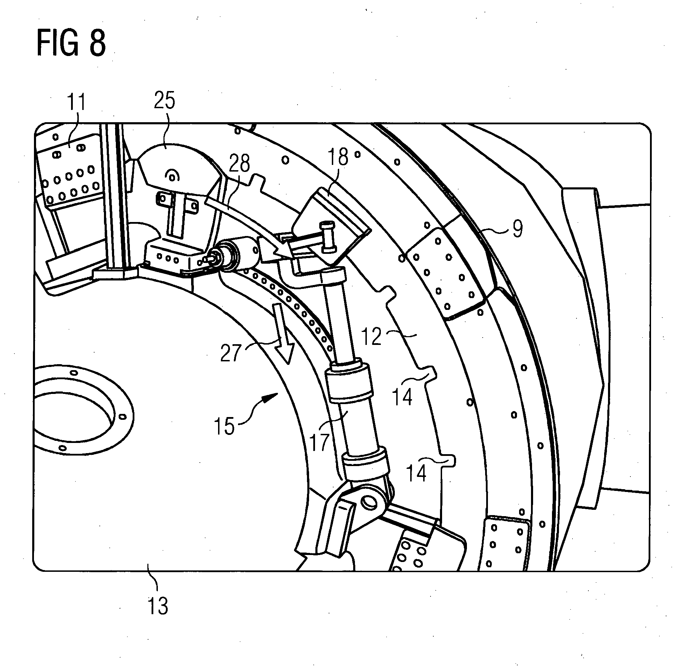

FIG 8 shows the linear actuator in a sixth step.

FIG 8 shows the linear actuator 15 after the calipers 18 were disengaged from the brake disc 12.

The hydraulic cylinder 17 is retracted along the direction of arrow 27. The calipers 18 are disengaged from the brake disc 12 and slide along the brake disc 12 back into the original position described in FIG 3.

After the hydraulic cylinder 17 is retracted completely, the calibers 18 can be closed again to engage with the brake disc 12 and the cut outs 14. The brake 11 and the locking mechanism 25 can then be disengaged and the linear actuator 15 is ready to push the rotor 9 a predetermined part of a rotation.

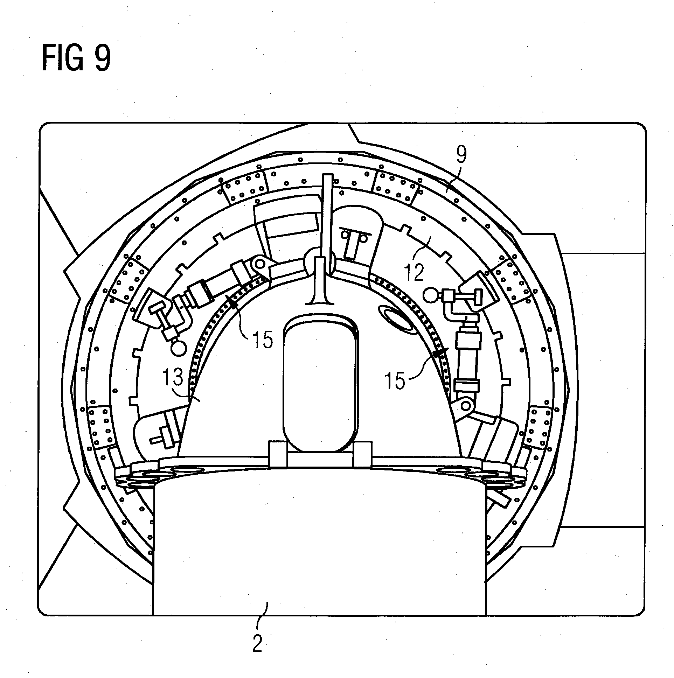

FIG 9 shows the use of two linear actuators at the brake disc of the wind turbine.

FIG 9 shows two linear actuators 15 that are attached to the support structure 13 and are acting on the brake disc 12 to push the rotor 9. The support structure 13 is connected to the tower 2 of the wind turbine.

## Claims

1. Direct driven wind turbine (1)
- comprising an electrical generator (3) with a rotor (9) and a stator (10), a hub (4) constructed to receive a rotor blade (6), and actuator means,
- whereby the hub (4) is connected to the rotor (9) of the electrical generator (3),
- whereby the hub (4) and the rotor (9) of the electrical generator (3) are rotatable mounted to the stator (10) of the generator (3),
- whereby the actuator means are constructed and arranged to rotate the rotor (9) of the electrical generator (3) in respect to the stator (10) of the electrical generator (3),
- whereby the actuator means comprise a linear actuator (15) and the linear actuator (15) rotates the rotor (9) of the generator (3),
- wherein the linear actuator (15) comprises a first end and a second end and an intermediate part, which is arranged between the first and the second end, while the intermediate part comprises a drive (17) that is constructed in a way to change the distance between the first end and the second end,
- wherein a brake disc (12) is connected to the rotor (9) and the second end of the linear actuator (15) is detachably attached to the brake disc (12),
- **characterized in that** the second end of the linear actuator comprises a caliper (18) that is constructed in a way to be connected to the brake disc (12).

2. Direct driven wind turbine (1) according claim 1, wherein the stator (10) of the generator (3) is attached to a support structure (13) and the first end of the linear actuator (15) is detachably attached to the support structure (13).

3. Direct driven wind turbine (1) according to one of the preceding claims , wherein the brake disc (12) comprises cut-outs (14) and the calipers (18) of the linear actuator (15) interact with at least one of the cut-outs (14).

4. Direct driven wind turbine (1) according to one of the preceding claims , wherein the linear actuator (15) comprises a drive (19) to activate and deactivate the caliper (18).

5. Direct driven wind turbine (1) according to claim 4, wherein the drive (19) is a pneumatic drive, a hydraulic drive or an electric drive.

6. Direct driven wind turbine (1) according to one of the preceding claims, wherein the drive (17) of the intermediate part of the linear actuator (15) comprises a pneumatic or hydraulic cylinder or an electrical drive.

7. Direct driven wind turbine (1) according to one of the preceding claims, wherein the linear actuator (15) is constructed and controlled in a way that the distance between the first end of the linear actuator and the second end can be set to a predetermined value, so that the second end of the linear actuator (15) and/or the brake disc (12) of the rotor, that is connected to the second end of the linear actuator (15), can be positioned in respect to the first end.

8. Method to rotate the rotor (9) of a direct driven wind turbine (1) according to one of the preceding claims, by
- rotating the rotor (9) of the generator (3) in respect to the stator (10) of the generator (3) by use of the linear actuator (15),
- attaching the caliper (18) to the brake disc (12) while the caliper (18) is in a first position in relation to the support structure (13),
- activating the linear actuator (15) to increase or decrease the distance between the first end and the second end of the linear actuator (15), so that the caliper (18) move from a first position to a second position in relation to the support structure (13), whereby the linear actuator (15) pushes or pulls the rotor (9), and the rotor (9) rotates in respect to the stator (10) of the electrical generator (3).

9. Method to rotate a rotor (9) of a direct driven wind turbine (1) according to claim 8, comprising the steps of rotating the rotor (9) of the generator (3) in respect to the stator (10) of the generator (3) in a stepwise motion.

## Patentansprüche

1. Getriebelose Windenergieanlage (1),
- die einen elektrischen Generator (3) mit einem Rotor (9) und einem Stator (10), eine Nabe (4), die so konstruiert ist, dass sie ein Rotorblatt (6) aufnimmt, und Stellgliedmittel umfasst,
- wobei die Nabe (4) mit dem Rotor (9) des elektrischen Generators (3) verbunden ist,
- wobei die Nabe (4) und der Rotor (9) des elektrischen Generators (3) drehbar an dem Stator (10) des Generators (3) angebracht sind,
- wobei die Stellgliedmittel so konstruiert und angeordnet sind, dass sie den Rotor (9) des elektrischen Generators (3) in Bezug zu dem Stator (10) des elektrischen Generators (3) drehen,
- wobei die Stellgliedmittel ein lineares Stellglied (15) umfassen und das lineare Stellglied (15) den Rotor (9) des Generators (3) dreht,
- wobei das lineare Stellglied (15) ein erstes Ende und ein zweites Ende sowie einen Zwischenteil umfasst, der zwischen dem ersten und dem zweiten Ende angeordnet ist, während der Zwischenteil einen Antrieb (17) umfasst, der so konstruiert ist, dass er den Abstand zwischen dem ersten und dem zweiten Ende ändert,
- wobei eine Bremsscheibe (12) mit dem Rotor (9) verbunden und das zweite Ende des linearen Stellglieds (15) abnehmbar an der Bremsscheibe (12) befestigt ist,
- **dadurch gekennzeichnet, dass** das zweite Ende des linearen Stellglieds einen Sattel (18) umfasst, der so konstruiert ist, dass er mit der Bremsscheibe (12) verbunden wird.

2. Getriebelose Windenergieanlage (1) nach Anspruch 1, bei der der Stator (10) des Generators (3) an einer Trägerkonstruktion (13) befestigt und das erste Ende des linearen Stellglieds (15) abnehmbar an der Trägerkonstruktion (13) befestigt ist.

3. Getriebelose Windenergieanlage (1) nach einem der vorhergehenden Ansprüche, bei der die Bremsscheibe (12) Aussparungen (14) umfasst und die Sättel (18) des linearen Stellglieds (15) mit mindestens einer der Aussparungen (14) zusammenwirken.

4. Getriebelose Windenergieanlage (1) nach einem der vorhergehenden Ansprüche, bei der das lineare Stellglied (15) einen Antrieb (19) zum Aktivieren und Deaktivieren des Sattels (18) umfasst.

5. Getriebelose Windenergieanlage (1) nach Anspruch 4, bei der es sich bei dem Antrieb (19) um einen pneumatischen, einen hydraulischen oder einen elektrischen Antrieb handelt.

6. Getriebelose Windenergieanlage (1) nach einem der vorhergehenden Ansprüche, bei der der Antrieb (17) des Zwischenteils des linearen Stellglieds (15) einen Pneumatik- oder Hydraulikzylinder oder einen elektrischen Antrieb umfasst.

7. Getriebelose Windenergieanlage (1) nach einem der vorhergehenden Ansprüche, bei der das lineare Stellglied (15) so konstruiert ist und gesteuert wird, dass der Abstand zwischen dem ersten Ende des linearen Stellglieds und dem zweiten Ende auf einen vorgegebenen Wert eingestellt werden kann, so dass das zweite Ende des linearen Stellglieds (15) und/ oder die Bremsscheibe (12) des Rotors, die mit dem zweiten Ende des linearen Stellglieds (15) verbunden ist, in Bezug auf das erste Ende positioniert werden kann.

8. Verfahren zum Drehen des Rotors (9) einer getriebelosen Windenergieanlage (1) nach einem der vorhergehenden Ansprüche durch
- Drehen des Rotors (9) des Generators (3) in Bezug zum Stator (10) des Generators (3) unter Einsatz des linearen Stellglieds (15),
- Befestigen des Sattels (18) an der Bremsscheibe (12), während er sich in einer ersten Position in Bezug zur Trägerkonstruktion (13) befindet,
- Aktivieren des linearen Stellglieds (15) zum Erhöhen oder Verringern des Abstands zwischen dem ersten und dem zweiten Ende des linearen Stellglieds (15), so dass sich der Sattel (18) aus einer ersten in eine zweite Position in Bezug auf die Trägerkonstruktion (13) bewegt, wodurch das lineare Stellglied (15) den Rotor (9) schiebt oder zieht und sich der Rotor (9) in Bezug auf den Stator (10) des elektrischen Generators (3) dreht.

9. Verfahren zum Drehen eines Rotors (9) einer getriebelosen Windenergieanlage (1) nach Anspruch 8, das die Schritte zum schrittweisen Drehen des Rotors (9) des Generators (3) in Bezug zum Stator (10) des Generators (3) umfasst.

## Revendications

1. Éolienne (1) à entraînement direct
- comprenant un générateur électrique (3) avec un rotor (9) et un stator (10), un moyeu (4) construit de façon à recevoir une pale (6) de rotor, et des moyens d'actionnement,
- d'où il résulte que le moyeu (4) est connecté au rotor (9) du générateur électrique (3),
- d'où il résulte que le moyeu (4) et le rotor (9) du générateur électrique (3) sont montés rotatifs sur le stator (10) du générateur (3),
- d'où il résulte que les moyens d'actionnement sont construits et agencés pour faire tourner le rotor (9) du générateur électrique (3) par rapport au stator (10) du générateur électrique (3),
- d'où il résulte que les moyens d'actionnement comprennent un actionneur linéaire (15) et l'actionneur linéaire (15) fait tourner le rotor (9) du générateur (3),
- dans laquelle l'actionneur linéaire (15) comprend une première extrémité et une deuxième extrémité et une partie intermédiaire, qui est agencée entre la première et la deuxième extrémité, tandis que la partie intermédiaire comprend un entraînement (17) qui est construit de façon à changer la distance entre la première extrémité et la deuxième extrémité,
- dans laquelle un disque (12) de frein est connecté au rotor (9) et la deuxième extrémité de l'actionneur linéaire (15) est fixée de façon détachable au disque (12) de frein,
- **caractérisée en ce que** la deuxième extrémité de l'actionneur linéaire comprend un étrier (18) qui est construit de façon à être connecté au disque (12) de frein.

2. Éolienne (1) à entraînement direct selon la revendication 1, dans laquelle le stator (10) du générateur (3) est fixé à une structure (13) de support et la première extrémité de l'actionneur linéaire (15) est fixée de façon détachable à la structure (13) de support.

3. Éolienne (1) à entraînement direct selon l'une des revendications précédentes, dans laquelle le disque (12) de frein comprend des découpes (14) et les étriers (18) de l'actionneur linéaire (15) interagissent avec au moins une des découpes (14).

4. Éolienne (1) à entraînement direct selon l'une des revendications précédentes, dans laquelle l'actionneur linéaire (15) comprend un entraînement (19) pour activer et désactiver l'étrier (18).

5. Éolienne (1) à entraînement direct selon la revendication 4, dans laquelle l'entraînement (19) est un entraînement pneumatique, un entraînement hydraulique ou un entraînement électrique.

6. Éolienne (1) à entraînement direct selon l'une des revendications précédentes, dans laquelle l'entraînement (17) de la partie intermédiaire de l'actionneur linéaire (15) comprend un cylindre pneumatique ou hydraulique ou un entraînement électrique.

7. Éolienne (1) à entraînement direct selon l'une des revendications précédentes, dans laquelle l'actionneur linéaire (15) est construit et commandé de façon à ce que la distance entre la première extrémité de l'actionneur linéaire et la deuxième extrémité puisse être fixée à une valeur prédéterminée, de sorte que la deuxième extrémité de l'actionneur linéaire (15) et/ou le disque (12) de frein du rotor, qui est connecté à la deuxième extrémité de l'actionneur linéaire (15), peut être positionnée par rapport à la première extrémité.

8. Procédé pour faire tourner un rotor (9) d'une éolienne (1) à entraînement direct selon l'une des revendications précédentes en
- faisant tourner le rotor (9) du générateur (3) par rapport au stator (10) du générateur (3) en utilisant l'actionneur linéaire (15),
- fixant l'étrier (18) au disque (12) de frein tandis que l'étrier (18) est dans une première position par rapport à la structure (13) de support,
- activant l'actionneur linéaire (15) pour augmenter ou diminuer la distance entre la première extrémité et la deuxième extrémité de l'actionneur linéaire (15), de façon à ce que l'étrier (18) se déplace d'une première position jusqu'à une deuxième position par rapport à la structure (13) de support, d'où il résulte que l'actionneur linéaire (15) pousse ou tire le rotor (9), et le rotor (9) tourne par rapport au stator (10) du générateur électrique (3).

9. Procédé pour faire tourner un rotor (9) d'une éolienne (1) à entraînement direct selon la revendication 8, comprenant les étapes de rotation du rotor (9) du générateur (3) par rapport au stator (10) du générateur (3) dans un mouvement pas à pas.
